# FASCICULE DE BREVET EUROPEEN

(11) **EP 1 547 849 B1**
(45) Date de publication et mention de la délivrance du brevet: **02.08.2006**
(21) Numéro de dépôt: 04300900.0
(22) Date de dépôt: 15.12.2004
(51) Int. Cl.: B60W 10/06, B60W 10/10

(54) **Dispositif de commande d'une boîte de vitesses automatisée destiné à améliorer la qualité des passages montants des vitesses sous faible couple du moteur**
Steuervorrichtung eines automatisierten Getriebes zur Verbesserung der Hochschaltqualität bei niedrigem Motordrehmoment
Control device for an automated transmission improving the quality of upshifting under low engine torque

(30) Priorité: 24.12.2003 FR 0315387
(43) Date de publication de la demande: 29.06.2005
(73) Titulaire: Renault s.a.s., 92100 Boulogne Billancourt (FR)
(72) Inventeur: Turpin, M. Thomas, 91400 Orsay (FR)
(74) Mandataire: Rougemont, Bernard

(56) Documents cités:
- FR-A- 2 703 748
- FR-A- 2 765 160
- FR-A- 2 785 961
- US-A- 5 033 328
- US-A- 5 228 368
- US-A- 5 547 434
- US-A- 5 879 266
- US-A- 6 144 911
- US-A1- 2001 006 059
- US-B1- 6 254 509

## Description

La présente invention concerne la commande des transmissions automatisées des groupes motopropulseurs de véhicules automobiles.

Cette invention se rapporte plus particulièrement aux véhicules automobiles comportant une boîte de vitesses à changement de rapports automatisée (boîtes automatiques classiques à trains épicycloïdaux ou boîtes manuelles robotisées), une unité de pilotage du moteur et une unité de pilotage de la boîte de vitesses. Ces unités de pilotage du moteur et de la boîte de vitesses peuvent s'échanger des informations, notamment l'unité de pilotage du moteur peut transmettre à l'unité de pilotage de la boîte de vitesses une information représentative de la demande de couple du conducteur ainsi que la valeur réelle du couple fourni par le moteur et l'unité de pilotage de la boîte de vitesses est adaptée pour transmettre au moteur des consignes de couple susceptibles de modifier le pilotage du moteur.

L'invention se propose d'améliorer le pilotage du moteur par la boîte de vitesses lors des passages de vitesses montants (d'un rapport inférieur vers un rapport supérieur) lorsque le couple représentatif de la volonté du conducteur est faible.

L'obtention d'un passage de vitesses montant confortable, sans à coup et rapide se fait généralement par un pilotage combiné et adéquat de la pression de ligne, de la pression dans les récepteurs hydrauliques (freins ou embrayages) de la boîte de vitesses et du couple moteur (tel que décrit dans le brevet FR-2 785 961 qui montre un dispositif de commande comprenant toutes les caractéristiques du préambule de la revendication indépendante 1). Le couple à transmettre par les récepteurs de la transmission automatique dépend du couple fourni par le moteur. Le couple réellement transmis dépend de la pression hydraulique appliquée à ces récepteurs. Lorsque la pression dans les récepteurs est pilotée par des vannes séquentielles (tout ou rien) et des restrictions, cette pression dans les récepteurs dépend directement de la pression de ligne. Pour gérer efficacement un passage de vitesses montant, la pression dans les récepteurs est pilotée selon un certain nombre de critères, dont le couple à transmettre.

Généralement, lors d'un passage de vitesses montant, les consignes de couples envoyées à l'unité de pilotage du moteur par l'unité de pilotage de la transmission automatique sont déterminées de telle façon qu'elles permettent soit de limiter les variations brutales du couple demandé par le conducteur, soit de diminuer le couple moteur pendant la phase de décroissance du régime moteur pour diminuer le temps global du passage du rapport. La gestion des passages de vitesses montants effectués avec un couple représentatif de la volonté conducteur faible n'est pas spécifique.

Il peut arriver, notamment dans le cas d'une transmission où la pression dans les récepteurs est pilotée par des vannes séquentielles, que lors d'un passage de vitesses montant effectué avec un couple représentatif de la volonté conducteur faible (généralement lorsque la pédale de l'accélérateur n'est pas appuyée), la pression de ligne minimale disponible soit trop élevée en regard du couple à transmettre dans les récepteurs. Il s'ensuit qu'un pilotage fin du passage de vitesse devient impossible et que la qualité de ce passage peut être dégradée.

Le but de la présente invention est d'améliorer la gestion de ces passages par un pilotage spécifique du couple moteur dans ces conditions de couple représentatif de la volonté conducteur faible.

L'invention vise ainsi un dispositif de commande d'une boîte de vitesses à changement de rapports automatisée pour véhicule automobile, comprenant une unité de pilotage de la boîte de vitesses en relation d'échange d'informations avec une unité de pilotage du moteur du véhicule, lesdites informations comprenant des informations représentatives de la demande de couple du conducteur et de la valeur réelle du couple fourni par le moteur,

Suivant l'invention, ce dispositif est caractérisé en ce que pour les passages de vitesses montants et lorsque la demande de couple du conducteur est inférieure à un seuil prédéterminé, l'unité de pilotage de la boîte de vitesses est adaptée pour transmettre à l'unité de pilotage du moteur une demande de couple supérieure à la demande de couple du conducteur.

Dans la plupart des boîtes de vitesses automatiques, le passage des vitesses est réalisé au moyen de récepteurs hydrauliques sollicités par une pression hydraulique qui est fonction du couple du moteur. Dans ce cas, le couple-cible demandé par l'unité de pilotage de la boîte de vitesses est suffisamment élevé pour que la pression nécessaire pour transmettre ce couple-cible soit toujours supérieure à la pression de ligne minimale réalisable.

D'autres particularités et avantages de l'invention apparaîtront encore dans la description ci-après.

Aux dessins annexés, donnés à titre d'exemples, non limitatifs :
- la figure 1 est un schéma montrant l'architecture, générale du dispositif de commande d'une boîte de vitesses à changement de rapports automatisée,
- la figure 2 est un schéma montrant les différentes phases de pilotage du couple moteur pendant un passage de vitesses montant effectué avec un couple moteur faible,
- la figure 3 est un schéma analogue à celui de la figure 2 montrant le cas où le couple demandé par le conducteur évolue pendant le passage de vitesses.

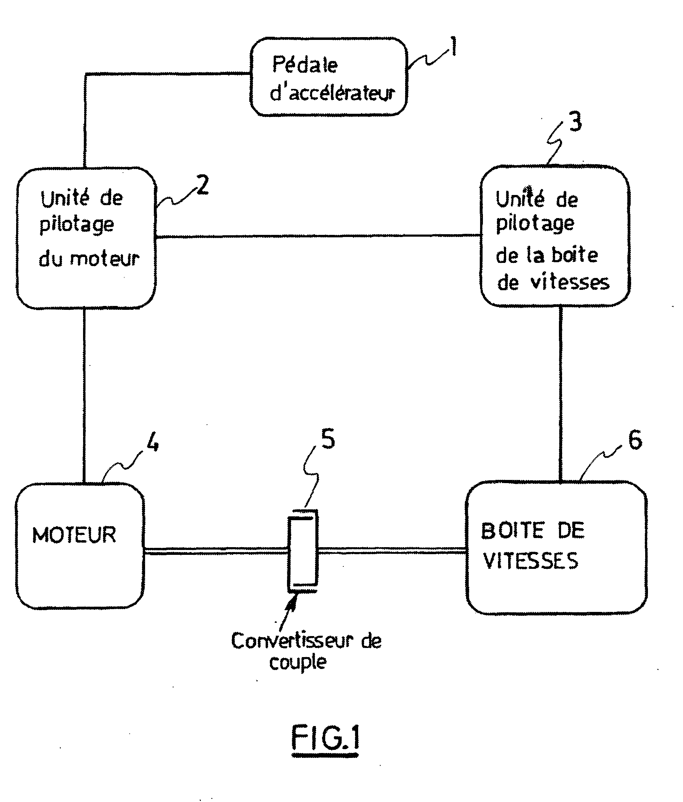

Comme montré par la figure 1, le moteur 4 est piloté par une unité de pilotage 2 et la boîte de vitesses 6 est pilotée par une unité de pilotage 3. Le conducteur du véhicule dispose d'un organe tel qu'une pédale d'accélérateur 1 sur lequel il agit pour commander le moteur 4 afin que ce dernier fournisse un certain couple dans le but d'obtenir une accélération du véhicule. La pédale d'accélérateur 1 envoie à l'unité de pilotage du moteur 2 un signal électrique représentant la position angulaire de la pédale. Cette position est transformée en demande de couple par l'unité de pilotage du moteur 2. L'unité de pilotage 2 agit sur le moteur 4 pour que celui-ci fournisse le couple attendu.

L'unité de pilotage 3 de la boîte de vitesses 6 peut transmettre un ordre de pilotage du moteur, telle qu'une consigne de couple, à l'unité de pilotage du moteur 2.

Le moteur 4 transmet son couple à la boîte de vitesses 6 par l'intermédiaire d'un convertisseur de couple 5.

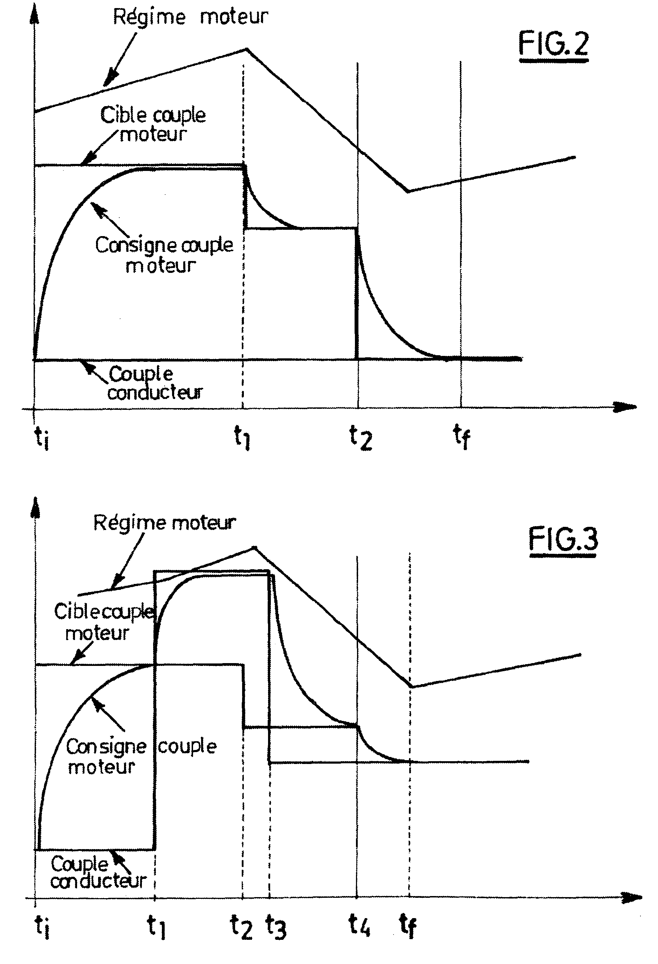

Le principe de l'invention est de ne pas autoriser le moteur 4, lors d'un passage de vitesses, à fournir un couple inférieur à une limite déterminée par l'unité de pilotage 3 de la boîte de vitesses. Ce couple est appelé « Cible couple moteur » et correspond au couple minimum que doit fournir le moteur pour que l'unité de pilotage de la boîte de vitesses puisse gérer correctement un passage de vitesses avec une pression de ligne minimale fixée par le système. Cette cible peut dépendre de différents paramètres (vitesses de rotation de l'arbre d'entrée, vitesse véhicule, température de l'huile contenue dans la boîte de vitesse, couple conducteur,...). Cette cible peut de plus évoluer entre les différentes phases du passage de vitesses comme illustré sur les figures 2 et 3 et décrit ci-après.

### Cas où le couple conducteur est toujours inférieur à la «Cible couple moteurs» (figure 2)

La figure 2 précise les différentes phases de pilotage du couple moteur pendant les passages de vitesses montants effectués avec un couple conducteur faible (inférieur à la Cible couple moteur). Sur cette figure 2 :
tᵢ est le début du passage de vitesses
t₁ est le début de la phase inertielle du passage (décroissance du régime moteur)
t₂ est un instant où le régime moteur est proche du synchronisme (le synchronisme est déterminé par le moment où la vitesse de rotation de l'arbre d'entrée de la boîte a atteint une vitesse égale à la vitesse du véhicule multipliée par le facteur de démultiplication de la chaîne de transmission pour le rapport supérieur)
t_{f} est la fin électrique du passage : le synchronisme est atteint et la consigne de couple transmise par l'unité de pilotage de la boîte est proche du couple représentatif de la volonté du conducteur.

Entre tᵢ et t₁ : l'unité, de pilotage de la boîte de vitesses transmet à l'unité de pilotage du moteur une consigne de couple qui est égale au couple conducteur à tᵢ et qui rejoint la Cible couple moteur progressivement (par un filtre ou une rampe par exemple),

Entre t₁ et t₂ : la Cible couple moteur prend une valeur différente qui est idéalement inférieure à sa valeur précédente. La consigne de couple transmise à l'unité de pilotage du moteur par l'unité de pilotage de la boîte rejoint cette nouvelle Cible progressivement.

Entre t₂ et t_{f} : le passage de vitesses est quasiment terminé. La consigne de couple transmise à l'unité de pilotage du moteur par l'unité de pilotage de la boîte rejoint le couple conducteur.

### Cas où le couple conducteur évolue pendant le passage de vitesses (figure 3)

La figure 3 précise les différentes phases de pilotage du couple moteur pendant les passages de vitesses montants débutes avec un couple conducteur faible (inférieur à la Cible couple moteur) mais où ce couple conducteur évolue pendant le passage, jusqu'à redevenir supérieur à la Cible couple moteur. Sur cette figure 3 :
tᵢ est le début du passage de vitesses
t₁ est l'instant où le couple conducteur devient supérieur à la Cible couple moteur
t₂ est le début de la phase inertielle du passage (décroissance du régime moteur)
t₃ est l'instant où le couple conducteur redevient inférieur à la Cible couple moteur
t₄ est l'instant où le régime moteur est proche du synchronisme (le synchronisme est déterminé par le moment où la vitesse de rotation de l'arbre d'entrée de la boîte a atteint une vitesse égale à la vitesse du véhicule multipliée par le facteur de démultiplication de la chaîne de transmission pour le rapport supérieur)
t_{f} est la fin électrique du passage : le synchronisme est atteint et la consigne de couple transmise par l'unité de pilotage de la boîte est proche du couple conducteur.

Entre tᵢ et t₁ : l'unité de pilotage de la boîte de vitesses transmet à l'unité de pilotage du moteur une consigne de couple qui est égale au couple conducteur à tᵢ et qui rejoint la Cible couple moteur progressivement (par un filtre ou une rampe par exemple).

Entre t₁ et t₃ : le couple conducteur devient supérieur à la Cible couple moteur. La gestion du passage de vitesses est effectuée classiquement (cf. brevet FR-2 785 961).

Entre t₃ et t₄ : le couple conducteur redevient inférieur à la Cible couple moteur. La consigne de couple transmise à l'unité de pilotage du moteur par l'unité de pilotage de la boîte rejoint la Cible couple moteur progressivement (de la même façon que le cas décrit précédemment).

Entre t₄ et t_{f} : le passage de vitesses est quasiment terminé. La consigne de couple transmise à l'unité, de pilotage du moteur par l'unité de pilotage de la boîte rejoint le couple conducteur.

De même si le passage de vitesses est commencé avec un couple conducteur supérieur à la Cible couple moteur et que le couple conducteur devient inférieur à cette cible pendant le passage, la consigne de couple moteur transmise par l'unité de pilotage de la boîte est telle qu'elle est saturée à la valeur de la cible puis est déterminée comme décrit dans les deux cas précédents.

Dans les deux cas, ci-dessus, le passage des Vitesses s'effectue en douceur, sans à coup,

## Revendications

1. Dispositif de commande d'une boîte de vitesses (6) à changement de rapports automatisée pour véhicule automobile, comprenant une unité de pilotage (3) de la boîte de vitesses (6) en relation d'échange d'informations avec une unité de pilotage (2) du moteur (4) du véhicule, lesdites informations comprenant des informations représentatives de la demande de couple moteur du conducteur et de la valeur réelle du couple fourni par le moteur (4) **caractérisé en ce que** pour les passages de vitesses montants et lorsque la demande de couple moteur du conducteur est inférieure à un seuil prédéterminé, l'unité de pilotage (3) de la boîte de vitesses (6) est adaptée pour transmettre à l'unité de pilotage (2) du moteur (4) une demande cible de couple moteur supérieure à la demande de couple moteur conducteur.

2. Dispositif de commande selon la revendication 1, dans lequel le passage des vitesses est réalisé au, moyen de récepteurs hydrauliques sollicités par une pression hydraulique dépendant d'une pression de ligne, **caractérisé en ce que** le couple-cible demandé par l'unité de pilotage (3) de la boîte de vitesses est suffisamment élevé pour que la pression hydraulique nécessaire pour transmettre ce couple-cible soit toujours supérieure à la pression de ligne minimale réalisable.

3. Dispositif de commande selon l'une des revendications 1 ou 2, **caractérisé en ce que** lorsque la demande de couple moteur représentative de la volonté du conducteur reste trop faible pendant toute la durée du passage de vitesses montant, l'unité de pilotage (3) de la boîte de vitesses (6) est adaptée pour transmettre à l'unité de pilotage (2) du moteur (4), les consignes suivantes :
a) dès le début du passage de vitesses :
- une augmentation progressive du couple moteur jusqu'à un couple cible,
b) entre le début de la phase inertielle du passage de vitesses et l'instant où le synchronisme des vitesses de rotation est atteint :
- une diminution du régime du moteur et,
- une diminution du couple moteur,
c) avant la fin du passage de vitesses :
- une diminution progressive du couple moteur jusqu'à la valeur du couple moteur représentatif de la demande du conducteur.

4. Dispositif de commande selon l'une des revendications 1 ou 2, **caractérisé en ce que** lorsque le couple moteur représentatif de la volonté du conducteur passe d'une valeur inférieure à une valeur cible à une valeur supérieure à cette valeur cible ou inversement, pendant la durée du passage de vitesses montant, l'unité de pilotage (3) de la boîte de vitesses (6) est adaptée pour transmettre à l'unité de pilotage (2) du moteur (4) les consignes suivantes :
- si le couple moteur représentatif de la volonté conducteur est inférieure à la valeur-cible, la consigne est élaborée conformément à la revendication 3 ;
- si le couple moteur représentatif de la volonté conducteur est supérieur à la valeur-cible, la consigne évolue progressivement jusqu'à une valeur correspondant au couple moteur représentatif de la volonté conducteur.

## Claims

1. Device for controlling an automatic gearbox (6) for motor vehicles, comprising a control unit (3) of the gearbox (6) which exchanges data with a control unit (2) of the engine (4) of the vehicle, the said data comprising data representing the driver's engine torque request and the actual value of the torque supplied by the engine (4), **characterized in that**, for upward gear shifts and when the driver's engine torque request is below a predetermined threshold, the control unit (3) of the gearbox (6) is adapted to transmit to the control unit (2) of the engine (4) a target engine torque request which is greater than the driver's engine torque request.

2. Control device according to Claim 1, in which the gear shift is carried out by means of hydraulic motors driven by a hydraulic pressure dependent on a line pressure, **characterized in that** the target torque requested by the control unit (3) of the gearbox is sufficiently high to ensure that the hydraulic pressure required to transmit this target torque is always greater than the minimum line pressure.

3. Control device according to one of Claims 1 and 2, **characterized in that**, when the engine torque request representing the driver's wish remains too low during the whole of the upward gear shift, the control unit (3) of the gearbox (6) is adapted to transmit to the control unit (2) of the engine (4) the following instructions:
a) from the start of the gear shift:
- a progressive increase in the engine torque up to a target torque,
b) between the start of the inertial phase of the gear shift and the instant at which the synchronization of the rotation speeds is achieved:
- a decrease in the engine speed, and
- a decrease in the engine torque,
c) before the end of the gear shift:
- a progressive decrease in the engine torque to the value of the engine torque representing the driver's request.

4. Control device according to one of Claims 1 and 2, **characterized in that**, when the engine torque representing the driver's wish changes from a value below a target value to a value greater than this target value or vice versa during the upward gear shift, the control unit (3) of the gearbox (6) is adapted to transmit to the control unit (2) of the engine (4) the following instructions:
- if the engine torque representing the driver's wish is below the target value, the instruction is generated in accordance with Claim 3;
- if the engine torque representing the driver's wish is greater than the target value, the instruction is progressively changed up to a value corresponding to the engine torque representing the driver's wish.

## Patentansprüche

1. Steuervorrichtung zur Steuerung eines Getriebes (6) mit automatischer Gangschaltung für Kraftfahrzeuge, umfassend eine mit einer Steuereinheit (2) des Motors (4) des Fahrzeugs in einer Beziehung des Informationsaustauschs stehende Steuereinheit (3) des Getriebes (6), wobei die Informationen solche umfassen, die für das vom Fahrer angeforderte Motordrehmoment und für den Istwert des vom Motor (4) gelieferten Moments stehen, **dadurch gekennzeichnet, dass** für die Hochschaltung der Gänge und bei einem vom Fahrer angeforderten Motordrehmoment, das unterhalb eines vorbestimmten Schwellwerts liegt, die Steuereinheit (3) des Getriebes (6) der Steuereinheit (2) des Motors (4) eine Sollanforderung für ein Motordrehmoment übermitteln kann, das höher ist als das vom Fahrer angeforderte Motordrehmoment.

2. Steuervorrichtung nach Anspruch 1, in der die Gangschaltung mittels hydraulischer Empfänger durchgeführt wird, welche mit einem von einem Leitungsdruck abhängigen hydraulischen Druck beaufschlagt sind, **dadurch gekennzeichnet, dass** das von der Steuereinheit (3) des Getriebes angeforderte Solldrehmoment so ausreichend hoch ist, dass der hydraulische Druck, der benötigt wird, um dieses Solldrehmoment zu übermitteln, stets höher ist als der realisierbare Mindestleitungsdruck.

3. Steuervorrichtung nach einem der Ansprüche 1 oder 2, **dadurch gekennzeichnet, dass**, wenn die für den Willen des Fahrers stehende Motordrehmomentanforderung während der gesamten Dauer der Hochschaltung zu schwach bleibt, die Steuereinheit (3) des Getriebes (6) der Steuereinheit (2) des Motors (4) die folgenden Anweisungen übermitteln kann:
a) sobald die Gangschaltung beginnt:
- eine allmähliche Steigerung des Motordrehmoments bis zu einem Solldrehmoment,
b) zwischen dem Beginn der inerten Phase der Gangschaltung und dem Augenblick, in dem die Drehgeschwindigkeiten synchron sind:
- eine Reduzierung des Motorbetriebs und
- eine Reduzierung des Motordrehmoments,
c) vor Beendigung der Gangschaltung:
- eine allmähliche Reduzierung des Motordrehmoments bis auf den Wert des Motordrehmoments, der für die Anforderung des Fahrers steht.

4. Steuervorrichtung nach einem der Ansprüche 1 oder 2, **dadurch gekennzeichnet, dass**, wenn das für den Willen des Fahrers stehende Motordrehmoment von einem Wert unterhalb eines Sollwertes zu einem Wert oberhalb dieses Sollwertes oder umgekehrt übergeht, die Steuereinheit (3) des Getriebes (6) der Steuereinheit (2) des Motors (4) während der Dauer der Hochschaltung die folgenden Anweisungen übermitteln kann:
- liegt das für den Willen des Fahrers stehende Motordrehmoment unterhalb des Sollwertes, so wird die Anweisung nach Anspruch 3 ausgeführt;
- liegt das für den Willen des Fahrers stehende Motordrehmoment oberhalb des Sollwertes, so verändert sich die Anweisung allmählich bis auf einen Wert, der dem für den Willen des Fahrers stehenden Motordrehmoment entspricht.
